# EUROPÄISCHE PATENTANMELDUNG

(11) **EP 2 372 492 A1**
(43) Veröffentlichungstag der Anmeldung: **05.10.2011**
(21) Anmeldenummer: 11002123.5
(22) Anmeldetag: 15.03.2011
(51) Int. Cl.: G06F 1/26, H01H 83/06

(54) **Steuerschaltung für ein elektronisches Haushaltsgerät**

(30) Priorität: 23.03.2010 DE 102010012311
(71) Anmelder: Diehl AKO Stiftung & Co. KG, 88239 Wangen im Allgäu (DE)
(72) Erfinder: Siebachmeyer Fritz, 88099 Neukirch (DE)
(74) Vertreter: Diehl Patentabteilung

(57) **Zusammenfassung**

Eine Steuerschaltung für ein elektronisches Haushaltsgerät umfasst eine Steuervorrichtung (10) zum Steuern des Betriebs eines Aggregats (14) des elektronischen Haushaltsgerätes, die über eine Versorgungsleitung (11) mit einem Versorgungsnetz (L, N) verbunden ist. In der Versorgungsleitung (11) ist eine Schaltvorrichtung (16) zum wahlweisen Verbinden oder Trennen der Steuervorrichtung (10) mit bzw. von dem Versorgungsnetz (L, N) angeordnet. Zum Reduzieren des Energieverbrauchs im Stand-by-Betrieb des elektronischen Haushaltsgerätes wird vorgeschlagen, dass die Schaltvorrichtung (16) einen in der Versorgungsleitung (11) angeordneten Schaltkontakt (18) mit einem bistabilen Schaltverhalten; ein mechanisches Stellglied (20) zum Schalten des Schaltkontaktes (18) in den die Steuervorrichtung (10) mit dem Versorgungsnetz (L, N) verbindenden Schaltzustand, wobei das Stellglied (20) mit einem durch einen Benutzer betätigbaren Bedienelement (24) gekoppelt ist; und eine elektrische Auslöseeinrichtung (22) zum Schalten des Schaltkontaktes (18) in den die Steuervorrichtung (10) von dem Versorgungsnetz (L, N) trennenden Schaltzustand, wobei die Auslöseeinrichtung (22) durch ein Aus-Signal von der Steuervorrichtung (10) aktivierbar ist, aufweist.

## Beschreibung

Die vorliegende Erfindung betrifft eine Steuerschaltung für ein elektronisches Haushaltsgerät nach dem Oberbegriff des Anspruches 1.

Es ist eine allgemeine Anforderung, den Energiebedarf elektronischer Geräte, wie zum Beispiel elektronischer Haushaltsgeräte, sowohl im Betriebszustand als auch im Stand-by-Betrieb möglichst gering zu halten. So fordert zum Beispiel die so genannte Ökodesign-Richtlinie 2005/32/EG der Europäischen Union die Minimierung der Leistungsaufnahme energiebetriebener Geräte im ausgeschalteten Zustand. Als ausgeschalteter Zustand bzw. Bereitschaftszustand gilt dabei derjenige Betriebszustand, welcher bei bestimmungsgemäßem Gebrauch nach Ablauf eines vorbestimmten Arbeitszyklus erreicht wird, ohne dass ein manuelles Ausschalten des Gerätes erfolgt.

In einem solchen ausgeschalteten Zustand sind normalerweise alle Aggregate des Haushaltsgerätes elektrisch ausgeschaltet, d.h. von der Stromversorgung getrennt. Bei herkömmlichen Steuerschaltungen dieser Art bleibt jedoch die Steuerungselektronik auch im Stand-by-Betrieb weiter mit dem Versorgungsnetz verbunden und entnimmt diesem ständig Energie. Diese Energieentnahme kann ggf. mit zusätzlichem elektronischem Aufwand sehr klein gehalten werden.

Ein weiterer Lösungsansatz ist die Verwendung eines Schalters, der die Steuerungselektronik im Stand-by-Betrieb automatisch vollständig vom Versorgungsnetz trennt und damit eine weitere Energieentnahme vermeidet. Ein solches Trennen der Steuerungselektronik vom Versorgungsnetz erfordert dann ein Wiedereinschalten des Gerätes zum erneuten Betrieb, das keine Stromversorgung benötigt, da die Steuerungselektronik zu diesem Zeitpunkt noch vom Versorgungsnetz getrennt ist.

Der vorliegenden Erfindung liegt daher die Aufgabe zugrunde, eine verbesserte Steuerschaltung für ein elektronisches Haushaltsgerät zu schaffen. Die Steuerschaltung soll insbesondere eine Reduzierung des Energieverbrauchs im Stand-by-Betrieb ermöglichen.

Diese Aufgabe wird gelöst durch eine Steuerschaltung für ein elektronisches Haushaltsgerät mit den Merkmalen des Anspruchs 1. Vorteilhafte Weiterbildungen und Ausgestaltungen der Erfindung sind Gegenstand der abhängigen Ansprüche.

Die Steuerschaltung für ein elektronisches Haushaltsgerät umfasst eine Steuervorrichtung zum Steuern des Betriebs eines Aggregats des elektronischen Haushaltsgerätes, die über eine Versorgungsleitung mit einem Versorgungsnetz verbunden ist. In der Versorgungsleitung ist eine Schaltvorrichtung zum wahlweisen Verbinden oder Trennen der Steuervorrichtung mit bzw. von dem Versorgungsnetz angeordnet. Diese Schaltvorrichtung weist die folgenden Komponenten auf:
- einen in der Versorgungsleitung angeordneten Schaltkontakt mit einem bistabilen Schaltverhalten;
- ein mechanisches Stellglied zum Schalten des Schaltkontaktes in den die Steuervorrichtung mit dem Versorgungsnetz verbindenden Schaltzustand, wobei das Stellglied mit einem durch einen Benutzer betätigbaren Bedienelement gekoppelt ist; und
- eine elektrische Auslöseeinrichtung zum Schalten des Schaltkontaktes in den die Steuervorrichtung von dem Versorgungsnetz trennenden Schaltzustand, wobei die Auslöseeinrichtung durch ein Aus-Signal von der Steuervorrichtung aktivierbar ist.

Die erfindungsgemäße Steuerschaltung für ein elektronisches Haushaltsgerät zeichnet sich durch einen einfachen Aufbau der Schaltvorrichtung aus. Insbesondere enthält die Schaltvorrichtung relativ wenig Komponenten, wodurch der Herstellungsaufwand und die Herstellungskosten niedrig gehalten werden können.

Zudem ermöglicht die Schaltvorrichtung ein vollständiges Trennen der Steuervorrichtung des elektronischen Haushaltsgerätes im Stand-by-Betrieb vom Versorgungsnetz, sodass die Steuervorrichtung diesem im Stand-by-Betrieb keine Energie mehr entnimmt. Dies wird dadurch ermöglicht, dass der Schaltkontakt der Schaltvorrichtung ein bistabiles Schaltverhalten besitzt und das Schalten des Schaltkontaktes in den die Steuervorrichtung mit dem Versorgungsnetz verbindenden Schaltzustand, d.h. das Einschalten der Steuervorrichtung mittels eines mechanischen Stellgliedes, d.h. ohne Zufuhr elektrischer Energie, erfolgt.

Das mechanische Stellglied der Schaltvorrichtung ist mit einem Bedienelement gekoppelt, das von einem Benutzer (manuell) betätigt werden kann. Auf diese Weise kann das elektronische Haushaltsgerät bzw. dessen Steuervorrichtung durch den Benutzer auf einfache Weise aus dem Stand-by-Betrieb heraus wieder in Betrieb genommen werden.

Zum Schalten des Schaltkontaktes in den die Steuervorrichtung von dem Versorgungsnetz trennenden Schaltzustand, d.h. zum Ausschalten der Steuervorrichtung, enthält die Schaltvorrichtung eine elektrische Auslöseeinrichtung, die durch ein Aus-Signal von der Steuervorrichtung aktivierbar ist. Da die Steuervorrichtung im eingeschalteten Betriebszustand mit dem Versorgungsnetz verbunden ist, kann das Auslösen der Schaltvorrichtung zum Ausschalten der Steuervorrichtung in den Stand-by-Betrieb elektrisch durchgeführt werden.

In einer Ausgestaltung der Erfindung ist der Schaltkontakt der Schaltvorrichtung in der Versorgungsleitung angeordnet. Dies kann eine(n) besonders einfache(n) Aufbau und/oder Funktionsweise der Schaltvorrichtung ermöglichen.

In einer weiteren Ausgestaltung der Erfindung wird die Versorgungsleitung gleichzeitig als eine Signalleitung der Auslöseeinrichtung für das Aus-Signal von der Steuervorrichtung benutzt. Durch diese Maßnahme kann zum Beispiel auf zusätzliche Signalleitungen verzichtet werden, was zu einem einfachen und kostengünstigen Aufbau der Steuerschaltung führen kann.

Bei dieser Ausführungsform weist die Auslöseeinrichtung der Schaltvorrichtung zum Beispiel eine in der Versorgungsleitung angeordnete Stromerfassungsvorrichtung auf. Hierdurch ist es zum Beispiel möglich, dass die Steuervorrichtung als Aus-Signal einen Stromimpuls über die Versorgungsleitung zu der Schaltvorrichtung schickt, welcher durch die Stromerfassungsvorrichtung erfasst wird, um schließlich den Schaltkontakt der Schaltvorrichtung in den die Steuervorrichtung von dem Versorgungsnetz trennenden Schaltzustand zu schalten.

Die Auslöseeinrichtung der Schaltvorrichtung kann beispielsweise einen thermischen oder magnetischen Auslösemechanismus aufweisen.

In einer bevorzugten Ausführungsform wird für die oben beschriebene Schaltvorrichtung der Steuerschaltung ein Schutzschalter eingesetzt. Hierdurch kann die Steuerschaltung mit herkömmlichen Bauteilen und damit kostengünstig aufgebaut werden.

In einer weiteren Ausgestaltung der Erfindung kann das mit dem Stellglied der Schaltvorrichtung gekoppelte Bedienelement in einer Bedienblende des elektronischen Haushaltsgerätes integriert sein.

Dabei kann das mit dem Stellglied der Schaltvorrichtung gekoppelte Bedienelement zum Beispiel ein separates Bedienelement oder ein in ein anderes Bedienelement integriertes Bedienelement in der Bedienblende des elektronischen Haushaltsgerätes sein.

Das mechanische Stellglied und das Bedienelement bilden vorzugsweise eine integrale Baueinheit. Auf diese Weise kann die Anzahl an Bauteilen reduziert werden.

Die oben beschriebene Steuerschaltung eignet sich in vorteilhafter Weise für elektronische Haushaltsgeräte, wie zum Beispiel Waschmaschinen, Wäschetrockner, kombinierte Waschtrockner, Geschirrspüler, Herde, Kochfelder, Mikrowellenöfen und dergleichen.

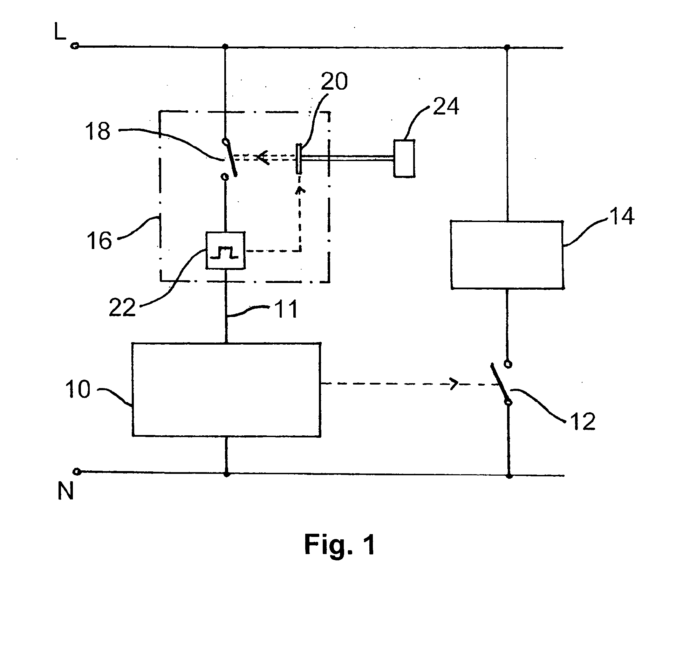

Obige sowie weitere Merkmale, Vorteile und Anwendungen der Erfindung werden aus der nachfolgenden Beschreibung eines bevorzugten, nicht-einschränkenden Ausführungsbeispiels unter Bezugnahme auf die beiliegende Zeichnung besser verständlich. Darin zeigt die einzige Figur ein stark vereinfachtes Blockschaltbild des Aufbaus einer Steuerschaltung gemäß der vorliegenden Erfindung.

In der Figur ist der Aufbau einer erfindungsgemäßen Steuerschaltung für ein elektronisches Haushaltsgerät schematisch dargestellt. Bei dem elektronischen Haushaltsgerät handelt es sich zum Beispiel um eine Waschmaschine.

Die Steuerschaltung enthält insbesondere eine Steuervorrichtung bzw. Steuerungselektronik 10, die über eine Versorgungsleitung 11 mit den Anschlüssen L und N eines Versorgungsnetzes verbunden ist. Das Aggregat bzw. die Aggregate 14 des Haushaltsgerätes (z.B. Antriebsmotor der Wäschetrommel bei einer Waschmaschine) werden von der Steuervorrichtung 10 über ein Schaltelement 12 in an sich bekannter Weise angesteuert.

In der Versorgungsleitung 11 der Steuervorrichtung 10 ist eine Schaltvorrichtung 16 vorgesehen, die beispielsweise durch einen Schutzschalter realisiert sein kann. Diese Schaltvorrichtung 16 dient dem wahlweisen Verbinden der Steuervorrichtung 10 mit dem Versorgungsnetz L, N (d.h. Einschalten der Steuervorrichtung) bzw. Trennen der Steuervorrichtung 10 von dem Versorgungsnetz L, N (d.h. Ausschalten der Steuervorrichtung) im Stand-by-Betrieb der Waschmaschine.

Zu diesem Zweck enthält die Schaltvorrichtung 16 einen Schaltkontakt 18, der in der Versorgungsleitung 11 angeordnet ist. Bei geschlossenem Schaltkontakt 18 ist die Steuervorrichtung 10 mit dem Versorgungsnetz L, N verbunden, bei geöffnetem Schaltkontakt 18 ist die Steuervorrichtung 10 von dem Versorgungsnetz L, N getrennt.

Der Schaltkontakt 18 besitzt ein bistabiles Schaltverhalten. D.h. der Schaltkontakt 18 verharrt so lange in einem der zwei Schaltzustände bis der Schaltzustand des Schaltkontaktes 18 bewusst geändert wird.

Zum Schließen des Schaltkontaktes 18 ist ein mechanisches Stellglied 20 vorgesehen. Dieses mechanische Stellglied 20 ist mit einem Bedienelement 24 in der Bedienblende des Haushaltsgerätes gekoppelt, das von einem Benutzer manuell betätigt werden kann. Für den Schließvorgang des Schaltkontaktes 18 über das Stellglied 20 wird keine elektrische Energie aus dem Versorgungsnetz L, N benötigt.

In einer Ausführungsvariante ist das mechanische Stellglied 20 ein Stößel, der fest mit einem Betätigungselement 24 als singuläres bzw. separates Bauelement in der Bedienblende verbunden ist. Es sind aber auch Designvarianten möglich, bei denen entweder nur das Stellglied 20 oder die gesamte Schaltvorrichtung 16 in einem Programmdrehwähler 24 in der Bedienblende integriert ist. In diesem Fall besteht eine bevorzugte Ausführungsform darin, die Verlängerung des Stößels 20 zentral in der Mitte des Drehwählerknopfes zu platzieren. In einer anderen Ausführungsvariante kann das Stellglied 20 bzw. die Schaltvorrichtung 16 auch in einer Reihe von Drucktasten im Bedienfeld des Haushaltsgerätes integriert sein.

Der das mechanische Stellglied 20 bildende Stößel kann in einer bevorzugten Ausführungsform zugleich das Bedienelement 24 in der Bedienblende bilden. Mit anderen Worten sind das Stellglied 20 und das Bedienelement 24 in diesem Fall als eine integrale Baueinheit ausgebildet.

Die Schaltvorrichtung 16 umfasst ferner einen Stromsensor 22, der als elektrische Auslöseeinrichtung der Erfindung mit einem thermischen oder magnetischen Auslösemechanismus dient. Dieser Stromsensor 22 erfasst ein von der Steuervorrichtung 10 über die als Signalleitung dienende Versorgungsleitung 11 gesendetes Aus-Signal (z.B. ein Stromimpuls). Der Auslösemechanismus der Auslöseeinrichtung 22 bewirkt ein Lösen des Stellgliedes 20 bzw. ein Öffnen des Schaltkontaktes 18, sodass die Steuervorrichtung 10 vom Versorgungsnetz L, N getrennt wird.

Zur Realisierung eines thermischen Auslösemechanismus können zum Beispiel Bimetallelemente oder Längenausdehnungselemente verwendet werden, durch welche der Versorgungsstrom der Steuervorrichtung 10 fließt. Für einen magnetischen Auslösemechanismus kann beispielsweise eine Spule eingesetzt werden.

Da die Steuervorrichtung 10 durch diese Schaltvorrichtung 16 im Stand-by-Betrieb vollständig vom Versorgungsnetz L, N getrennt werden kann, entnimmt sie dem Versorgungsnetz L, N keine Energie mehr, was zu einer deutlichen Reduzierung des Energieverbrauches des mit einer solchen Steuerschaltung ausgestatteten Haushaltsgerätes führt.

Bei der Inbetriebnahme des Haushaltsgerätes betätigt der Benutzer das Bedienelement 24 und schließt so mit Hilfe des mechanischen Stellgliedes 20 den Schaltkontakt 18. Auf diese Weise wird die Steuervorrichtung 10 mit dem Versorgungsnetz L, N verbunden, d.h. mit Energie versorgt und damit eingeschaltet. Es erfolgt dann der programmgemäße Gebrauch des Haushaltsgerätes in der gewohnten Art und Weise.

Nach dem Programmende trennt sich die Steuervorrichtung 10 automatisch und selbsttätig vom Versorgungsnetz L, N, indem sei ein entsprechendes Aus-Signal in Form eines Stromimpulses auf die Versorgungsleitung 11 schaltet. Dieser Stromimpuls wird von dem Stromsensor 22 erfasst, welcher dann über seinen thermischen oder magnetischen Auslösemechanismus das Stellglied 20 löst, um den Schaltkontakt 18 zu öffnen. Der Stromimpuls sollte dabei so lange anliegen, bis der Schaltkontakt 18 geöffnet ist, um ein sicheres Stromlosschalten der Steuervorrichtung 10 zu gewährleisten.

Der Schaltkontakt 18 verharrt dann so lange in seinem geöffneten Zustand, bis er durch eine Betätigung des Bedienelements 24 und damit des mechanischen Stellgliedes 20 wieder geschlossen wird und die Schaltvorrichtung 16 dadurch in den Einschaltzustand übergeht.

### BEZUGSZIFFERNLISTE

- 10: Steuervorrichtung
- 11: Versorgungsleitung
- 12: Schaltelement
- 14: Aggregat
- 16: Schaltvorrichtung
- 18: Schaltkontakt
- 20: mechanisches Stellglied
- 22: elektrische Auslöseeinrichtung
- 24: Bedienelement
- L, N: Versorgungsnetz

## Patentansprüche

1. Steuerschaltung für ein elektronisches Haushaltsgerät, mit einer Steuervorrichtung (10) zum Steuern des Betriebs eines Aggregats (14) des elektronischen Haushaltsgerätes, die über eine Versorgungsleitung (11) mit einem Versorgungsnetz (L, N) verbunden ist, wobei in der Versorgungsleitung (11) eine Schaltvorrichtung (16) zum wahlweisen Verbinden oder Trennen der Steuervorrichtung (10) mit bzw. von dem Versorgungsnetz (L, N) angeordnet ist,
**dadurch gekennzeichnet,**
**dass** die Schaltvorrichtung (16) aufweist:
- einen in der Versorgungsleitung (11) angeordneten Schaltkontakt (18) mit einem bistabilen Schaltverhalten;
- ein mechanisches Stellglied (20) zum Schalten des Schaltkontaktes (18) in den die Steuervorrichtung (10) mit dem Versorgungsnetz (L, N) verbindenden Schaltzustand, wobei das Stellglied (20) mit einem durch einen Benutzer betätigbaren Bedienelement (24) gekoppelt ist; und
- eine elektrische Auslöseeinrichtung (22) zum Schalten des Schaltkontaktes (18) in den die Steuervorrichtung (10) von dem Versorgungsnetz (L, N) trennenden Schaltzustand, wobei die Auslöseeinrichtung (22) durch ein Aus-Signal von der Steuervorrichtung (10) aktivierbar ist.

2. Steuerschaltung nach Anspruch 1,
**dadurch gekennzeichnet,**
**dass** der Schaltkontakt (18) der Schaltvorrichtung (16) in der Versorgungsleitung (11) angeordnet ist.

3. Steuerschaltung nach Anspruch 1 oder 2,
**dadurch gekennzeichnet,**
**dass** die Versorgungsleitung (11) als eine Signalleitung der Auslöseeinrichtung (22) für das Aus-Signal von der Steuervorrichtung (10) dient.

4. Steuerschaltung nach Anspruch 3,
**dadurch gekennzeichnet,**
**dass** die Auslöseeinrichtung (22) der Schaltvorrichtung (16) eine in der Versorgungsleitung (11) angeordnete Stromerfassungsvorrichtung (22) aufweist.

5. Steuerschaltung nach einem der vorherigen Ansprüche,
**dadurch gekennzeichnet,**
**dass** die Auslöseeinrichtung (22) der Schaltvorrichtung (16) einen thermischen oder magnetischen Auslösemechanismus aufweist.

6. Steuerschaltung nach einem der vorherigen Ansprüche,
**dadurch gekennzeichnet,**
**dass** die Schaltvorrichtung (16) ein Schutzschalter ist.

7. Steuerschaltung nach einem der vorherigen Ansprüche,
**dadurch gekennzeichnet,**
**dass** das mit dem Stellglied (20) der Schaltvorrichtung (16) gekoppelte Bedienelement (24) in einer Bedienblende des elektronischen Haushaltsgerätes integriert ist.

8. Steuerschaltung nach Anspruch 7,
**dadurch gekennzeichnet,**
**dass** das mit dem Stellglied (20) der Schaltvorrichtung (16) gekoppelte Bedienelement (24) ein separates Bedienelement oder ein in ein anderes Bedienelement integriertes Bedienelement in der Bedienblende des elektronischen Haushaltsgerätes ist.

9. Steuerschaltung nach einem der vorherigen Ansprüche,
**dadurch gekennzeichnet,**
**dass** das mechanische Stellglied (20) und das Bedienelement (24) eine integrale Baueinheit bilden.
